# EUROPEAN PATENT APPLICATION

(11) **EP 3 940 341 A1**
(43) Date of publication of application: **19.01.2022**
(21) Application number: 20900748.3
(22) Date of filing: 25.11.2020
(51) Int. Cl.: G01C 21/36

(54) **NAVIGATION AUDIO PLAYBACK METHOD, APPARATUS AND DEVICE, AND COMPUTER STORAGE MEDIUM**

(30) Priority: 22.05.2020 CN 202010439893
(71) Applicant: Baidu Online Network Technology (Beijing) Co., Ltd, Beijing 100085 (CN)
(72) Inventor: HUANG, Jizhou, Beijing 100085 (CN); ZHANG, Hao, Beijing 100085 (CN)
(74) Representative: Maiwald Patent- und Rechtsanwaltsgesellschaft mbH
(86) International application number: PCT/CN2020/131319
(87) International publication number: WO 2021/232726

(57) **Abstract**

A method, an apparatus, and a device for playing navigation audios, and a computer storage medium are provided in the present disclosure, which relate to the big data technology. The specific implementation is: determining navigation audios to be broadcast in a navigation route and broadcast locations; and broadcasting a corresponding navigation audio at the broadcast location, and selecting non-navigation audios to be played in unoccupied durations between broadcast locations according to unoccupied durations. The technical solution of the present disclosure can select appropriate non-navigation audios to cut in and to be played in unoccupied durations between navigation audios on the premise of ensuring the playing of navigation audios, and moreover ensure the listening experience of non-navigation audios.

## Description

This application claims priority to Chinese Patent Application No. 2020104398935, titled with "METHOD, APPARATUS, DEVICE FOR PLAYING NAVIGATION AUDIOS, AND COMPUTER STORAGE MEDIUM", filed on May 22, 2020, the entire contents of which are incorporated herein by reference.

### TECHNICAL FIELD

The present disclosure relates to a field of computer application technology, and particularly to a field of big data technology.

### BACKGROUND

In order to reduce fatigue and boredom during driving, drivers usually choose some audios for playing to increase knowledge or kill the time. At the same time, users increasingly rely on navigation services provided by map applications while driving. Therefore, when two audio files are played at the same time, since the two audio files exist independently and are played by different applications, "collision" is inevitable. When two audio files are sounded at the same time, one of them is generally selected to play based on priorities. When the navigation audio is preferred, the playback of the non-navigation audio will be intermittent and the listening experience will be poor. When the non-navigation audio is preferred, users may miss navigation broadcast content, easily missing intersections, detours, violations, and the like, and even causing safety hazards.

### SUMMARY

In view of this, a method, an apparatus, a device for playing navigation audios, and a computer storage medium is provided in the present disclosure to solve the above technical problems.

In a first aspect, the present disclosure provides a method for playing navigation audios, including: determining navigation audios to be broadcast in a navigation route and broadcast locations; and broadcasting a corresponding navigation audio at the broadcast location, and selecting non-navigation audios to be played in unoccupied durations between broadcast locations according to unoccupied durations.

In a second aspect, the present disclosure provides an apparatus for playing navigation audios, including: a navigation determining unit, configured to determine navigation audios to be broadcast in a navigation route and broadcast locations; and a broadcast processing unit, configured to broadcast a corresponding navigation audio at the broadcast location, and select non-navigation audios to be played in unoccupied durations between broadcast locations according to unoccupied durations.

In a third aspect, the present disclosure provides an electronic device, including: at least one processor, and a memory communicatively coupled to at least one processor; wherein, the memory is configured to store instructions executable by at least one processor. When the instructions are executed by the at least one processor, the at least one processor is enabled to execute any one of the above methods.

In a fourth aspect, the present disclosure provides a non-transitory computer-readable storage medium having computer instructions stored thereon, wherein the computer instructions are configured to enable the computer to execute any one of the above methods.

The technical solution of the present disclosure can select appropriate non-navigation audios to cut in and to be played in unoccupied durations between navigation audios on the premise of ensuring the playing of navigation audios, and meanwhile ensure the listening experience of non-navigation audios.

Other effects of alternatives will be described below in combination with specific embodiments.

### BRIEF DESCRIPTION OF THE DRAWINGS

The drawings are used for better understanding of the solution, and do not constitute a limitation on the disclosure.
FIG. 1 is an exemplary system architecture to which embodiments of the present disclosure may be applied.
FIG. 2 is a flow chart illustrating a main method according to an exemplary embodiment.
FIG. 3 is a flow chart illustrating a method for determining non-navigation audios according to an exemplary embodiment.
FIG. 4 is a schematic diagram illustrating an apparatus for playing navigation audios according to an exemplary embodiment.
FIG. 5 is a schematic diagram of broadcasting in a navigation route according to an exemplary embodiment;
FIG. 6 is a block diagram illustrating an electronic device for implementing embodiments of the present disclosure.

### DETAILED DESCRIPTION

The following describes exemplary embodiments of the present disclosure with reference to the attached drawings, which include various details of embodiments of the present disclosure to facilitate understanding, and they should be considered as merely illustrative. Therefore, those skilled in the art should realize that various changes and modifications can be made to the embodiments described herein without departing from the scope and spirit of the present disclosure. Similarly, for clarity and conciseness, descriptions of well-known functions and structures are omitted in the following description.

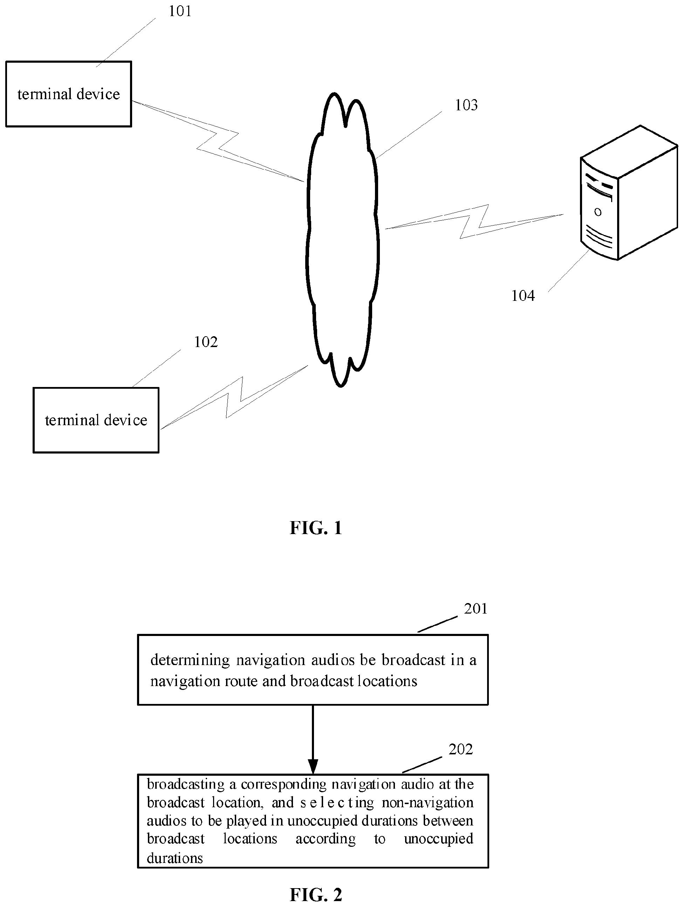

FIG. 1 is an exemplary system architecture to which embodiments of the present disclosure may be applied. As illustrated in FIG. 1, the system architecture may include terminal devices 101 and 102, a network 103 and a server 104. The network 103 is configured to provide a medium for communication links between the terminal devices 101 and 102 and the server 104. The network 103 may include various connection types, such as wired or wireless communication links, or fiber optic cables, and the like.

The user can use the terminal devices 101 and 102 to interact with the server 104 through the network 103. Various applications may be installed on the terminal devices 101 and 102, such as map applications, voice interactive applications, web browser applications, communication applications, and the like.

The terminal devices 101 and 102 may be various electronic devices, including but not limited to smart phones, tablet computers, smart speakers, smart wearable devices, and the like. The apparatus for playing navigation audios provided by the present disclosure may be provided and run in the server 104 mentioned above, and may also be provided and run in the terminal devices 101 or 102. The apparatus may be implemented as a plurality of software or software modules (for example, to provide distributed services), or as a single software or software module, which is not specifically limited here.

For example, the apparatus for playing navigation audios is provided and run on the server 104, then the apparatus for playing navigation audios uses the method provided in the embodiments of the present disclosure to determine navigation audios and non-navigation audios to be broadcast in the navigation route, and provides them to the terminal devices 101 or 102 for playing.

The server 104 may be a single server or a server group consisting of a plurality of servers. It should be understood that the number of terminal devices, the number of networks, and the number of servers in FIG. 1 are merely illustrative. According to implementation needs, there may be any number of terminal devices, networks, and servers.

FIG. 2 is a flow chart illustrating a main method according to an exemplary embodiment of the present disclosure. In embodiments of the present disclosure, navigation audios and non-navigation audios are no longer controlled and played by different applications, but are unified controlled and played by the apparatus for playing navigation audios, for example, are controlled and played by a map application with navigation function. As illustrated in FIG. 2, the method may include the following blocks.

In 201, navigation audios to be broadcast in a navigation route and broadcast locations are determined.

Normally, after the user initiates a route planning request, route planning is performed based on a starting point location, a final location, and a travel mode input by the user, and the route planning result is returned to the user. The user can may select one route for navigation from the route planning result. The present disclosure is executed when the user selects one route for navigation, and the route selected by the user is the navigation route. For one navigation route, there will be a plurality of broadcast locations for playing navigation audios.

In the present disclosure, all navigation audios existing in the navigation route may be used as the navigation audios to be broadcast. The broadcast location refers to the specific geographic location where a navigation audio is broadcast. For example, a navigation audio indicating that there is a need to turn or wait is broadcast at a certain location before the intersection, and speed limit requirements of a certain road section is broadcast at the entrance of the road section, and the like.

Generally, in order to ensure the safety of the user, the broadcast of navigation audios in a navigation route is often intensive, but not all users need these navigation audios. For a navigation route, when the user is familiar with the navigation route, only some key ones of the navigation audios are needed. However, when the user is not familiar with the navigation route, more navigation content is needed. Therefore, as a preferred implementation, a navigation audio whose importance matches with the above familiarity may be selected as the navigation audio to be broadcast from navigation audios of the navigation route according to the user's familiarity with the navigation route and the importance of the navigation audio, thereby ensuring the navigation broadcast that matches with the user's navigation needs during the navigation process.

The user's familiarity with the navigation route may be determined based on the number of times the user has been navigated the route in history. When the number of times the user has been navigated the route in history exceeds the preset number threshold, it is considered that the user is familiar with the navigation route.

For example, when the navigation route of user A is a familiar work route, the navigation broadcast content mainly focuses on turning points. For each intersection, the user is only reminded once, and the electronic eye information is not prompted. For another example, for the same route, user B is not familiar with it. In addition to the main turning point information, the navigation broadcast content needs to be accompanied by detailed instructions to assist judgment and to broadcast electronic eye information.

In addition to simply divide user's familiarity with the navigation route into familiar and unfamiliar as described above, it may also be divided into a more granular level, that is, be divided into a variety of different levels of familiarity, and there are different types of navigation audios corresponding to different levels.

In 202, a corresponding navigation audio is broadcast at the broadcast location, and non-navigation audios to be played in unoccupied durations between broadcast locations are selected according to unoccupied durations.

In embodiments of the present disclosure, in addition to broadcasting navigation audios, the navigation device also plays non-navigation audios during unoccupied durations between navigation audios. As one implementation, after the navigation audios to be broadcast in the navigation route are determined, a sequence of all non-navigation audios to be played in the entire navigation route is determined, and then audios are played according to the determined sequence. This is equivalent to determining the audio sequence in advance, but during the user's travel process, changes of road conditions, changes of the speed caused by the user's personal reasons, staying, and the like will cause the time of reaching the playing location of a navigation audio to change, that is, when the above unoccupied duration changes, the pre-determined sequence is no longer suitable and needs to be re-adjusted. Therefore, another preferred embodiment may be selected, that is, every time a piece of navigation audio or non-navigation audio is played, the next non-navigation audio to be played is determined in real time.

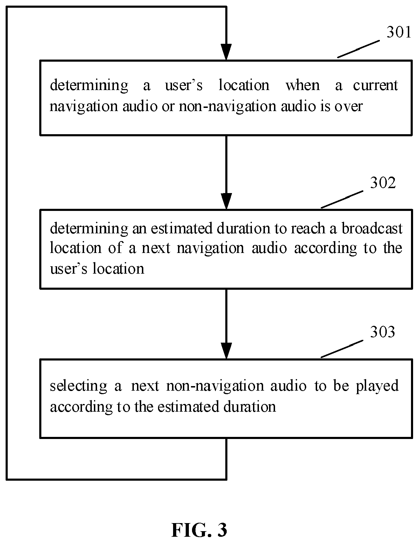

Specifically, when respective non-navigation audios to be played are determined one by one, the process illustrated in FIG. 3 may be executed.

In 301, a user's location is determined when a current navigation audio or non-navigation audio is over.

When this process is applied to the above mode in which the audio to be played is selected in real time, the (i+1)th audio to be played may be determined when the ith audio is playing, in which the audio may be a navigation audio or a non-navigation audio. In this case, the location of the user when the current ith audio is over may be estimated based on the remaining time of the ith audio and the current speed of the user, in which i is a positive integer.

It is also possible to determine the (i+1)th audio when the ith audio is over. In this case, the location of the user when the current ith audio is over is the current location of the user.

When this process is applied to the above mode of pre-determining the audio sequence, each audio to be played is determined one by one. For example, when the first piece is a navigation audio, the first navigation audio is used as the current navigation audio to determine whether a navigation audio or a non-navigation audio is played next. When a non-navigation audio is played next, the specific non-navigation audio to be played is determined. After the next audio to be played is determined, the next audio is used as the current audio to determine whether a navigation audio or a non-navigation audio is played next again. When a non-navigation audio is played next, the specific non-navigation audio to be played is determined, and so on. For each current audio, the location of the user when each current audio is over is determined, which may be estimated based on the average speed of the user's travel mode and the play duration of each audio.

In 302, an estimated duration to reach a broadcast location of a next navigation audio is determined according to the user's location.

Here, the estimated duration (estimated time of arrival, ETA) to reach the broadcast location of the next navigation audio may be estimated based on the distance, the user's speed, road conditions and the like between the user's location and the broadcast location of the next navigation audio. The specific implementation of this may use any ETA estimation method in the related art, which will not be elaborated in detail here.

In 303, a next non-navigation audio to be played is selected according to the estimated duration.

The core of the specific selection strategy of this step is that the selected non-navigation audio needs to be over within the estimated duration, or the core content of the non-navigation audio needs to be over within the estimated duration. The core content of the non-navigation audio refers to the part that can reflect the theme of the non-navigation audio, and the user will generally understand the content of the audio after listening to the core content. For example, the core content of a news audio is the part that can reflect the theme of the news, the core content of a crosstalk audio is the part that contains the punchline of the crosstalk, and the core content of a song audio is the part that contains the verse of the song, and the core content of a joke is the part that contains the punchline of the joke.

The non-navigation audio may be obtained and selected from an audio pool, in which the audio pool may be an audio pool maintained by a service provider of a map application, or an audio pool provided by a service provider of a third-party application having a cooperative relation.

The audio pool contains various types of non-navigation audios, including but not limited to news, novels, music, songs, jokes, and the like. In addition to non-navigation audios, the audio pool also maintains the audio duration and core content identifications of each non-navigation audio. The core content identifications refer to the identifications of the start time and the end time of the core content of the non-navigation audio. The play duration of the core content may be determined by the identifications.

In addition to ensuring that the audio or the core content of the audio is over within the estimated duration, non-navigation audios may also be selected based on the user's playback needs. Several preferred ways are provided below.

Way 1: When the estimated duration is greater than the preset first duration threshold, it is considered that the next navigation audio is far away, and the selection method setting the user's demand a priority is used. That is, a non-navigation audio required by the user is selected from the non-navigation audios whose audio duration or core content play duration is less than the estimated duration.

When the estimated duration is greater than or equal to the preset second duration threshold, and is less than or equal to the first duration threshold, it is considered that the next navigation audio is near, and the selection method setting the duration a priority is used. That is, the non-navigation audio required by the user is selected from non-navigation audios whose audio duration or core content play duration is less than and close to the estimated duration. When a difference between the estimated duration and the audio duration or the core content play duration is less than the second duration threshold, the audio duration or the core content play duration is close to the estimated duration.

When the estimated duration is less than the second duration threshold, it is considered that the next navigation audio is about to be played, and no non-navigation audio is selected to cut in.

The above first duration threshold is greater than the second duration threshold.

For example, the first duration threshold may be 4 minutes, and the second duration threshold may be 10 seconds. After a navigation audio or a non-navigation audio is over, it is determined that the estimated duration to reach the next navigation audio is 6 minutes, which is greater than 4 minutes, then the selection method setting the user's needs a priority may be used. Non-navigation audios with a play duration longer than 6 minutes may be filtered out from the audio source (including various non-navigation audios), and then audios that meet the user's needs best may be chosen from the remaining non-navigation audios.

After a navigation audio or a non-navigation audio is over, it is determined that the estimated duration to reach the next navigation audio is 3 minutes, which is between 10 seconds and 4 minutes, then the selection method setting the duration a priority may be used. Non-navigation audios whose play duration or core content is between 2 minutes and 50 seconds and 3 minutes are selected from the audio source, and then the non-navigation audios that meet the user's needs may be further determined from these non-navigation audios.

After a navigation audio or a non-navigation audio is over, it is determined that the estimated duration to reach the next navigation audio is less than 10 seconds, then no non-navigation audio is selected as the next audio, but a next navigation audio is waited for playing.

Way 2: when the estimated duration is greater than the preset second duration threshold, a non-navigation audio whose audio duration or core content play duration is less than and closest to the estimated duration is selected from non-navigation audios required by the user. No non-navigation audio is selected when the estimated duration is less than the second duration threshold.

In this way, no distinction is made between setting the user's needs a priority and setting the duration a priority, but as long as the estimated duration is greater than the second duration threshold, a non-navigation audio with the most appropriate duration is directly selected from the non-navigation audios needed by the user. For example, after a navigation audio or a non-navigation audio is over, it is determined that the estimated duration to reach the next navigation audio is 5 minutes, which is greater than 10 seconds, then all non-navigation audios needed by the user are determined from the audio source, from which a non-navigation audio whose audio duration or core content play duration is less than and closest to 5 minutes is selected, such as a news of 4 minutes and 55 seconds.

Similarly, after a navigation audio or a non-navigation audio is over, it is determined that the estimated duration to reach the next navigation audio is less than 10 seconds, then no non-navigation audio is selected as the next audio, but a next navigation audio is waited for playing.

Of course, in addition to the above two ways, other ways may also be used. Only two preferred ways are listed here, and other ways are not listed one by one.

In the two ways above, the non-navigation audios needed by the user are determined according to at least one of destination, environmental condition, route condition, user driving condition, and user preference information.

The destination mainly refers to the type information of the destination, such as company, home, supermarket, transportation hub, scenic spot, and the like. For example, users prefer warm music when they go home, news audio when they go to the company, and cheerful music when they go to scenic spots, and the like.

The environmental condition may include the current time, date, whether a holiday or a working day, weather, and the like. These environmental conditions may have an impact on the audios needed by users. For example, users prefer enthusiastic music in clear weather, and warm music in gloomy weather. For another example, users prefer song audios on holidays, and news audios on weekdays, and the like.

The route condition may include the congestion state, road grade, length, and the like of the current route. These conditions may also have an impact on the audios needed by users. For example, in a congestion state, users prefer soothing music or news about road conditions. For another example, for a flat and long route, users prefer fiction audios, and the like.

The user's driving status may include the user's driving duration, driving mileage, congestion status of the road that has just been passed, and the like. These conditions reflect the fatigue of the user to a certain extent, and will also affect the audios needed by the user. For example, when the user has been driving for a long time or a long mileage, he/she needs to cheer up, and cheerful music, rock music, and the like are more needed to uplift the spirit.

The user preference information may include the user's preference tag of the audio type, preference vector, and the like, for example, the user prefers news audios, or the user prefers jazz music, and the like. The user preference information may be determined by tags set by the user, or determined based on the user's behavioral feedback on the audio files (for example, the behavior of switching audio files, the behavior of collecting audio files, the behavior of listening to a whole file, and the like).

At least one of the above factors may be integrated to determine the non-navigation audios needed by the user.

During the above process for playing audios, the user may not hear clearly because of unpreparation when a non-navigation audio is switched to a navigation audio. Therefore, in the present disclosure, the switching prompt tone may be played between a non-navigation audio and a navigation audio. That is, when the non-navigation audio is switched to the navigation audio, the switching prompt tone may be added to alert the user and avoid the user from the occurrence of missing intersections, violations, and the like.

The switching prompt tone may be, for example, a short beep sound, a human voice prompt tone, and the like. The specific form of the prompt tone is not specifically limited here.

The above is a detailed description of the method provided by the present disclosure, and the apparatus provided by the present disclosure will be elaborated below in detail in combination with embodiments.

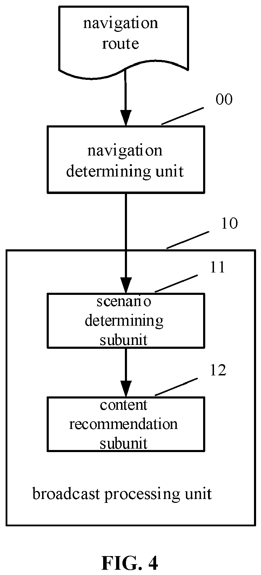

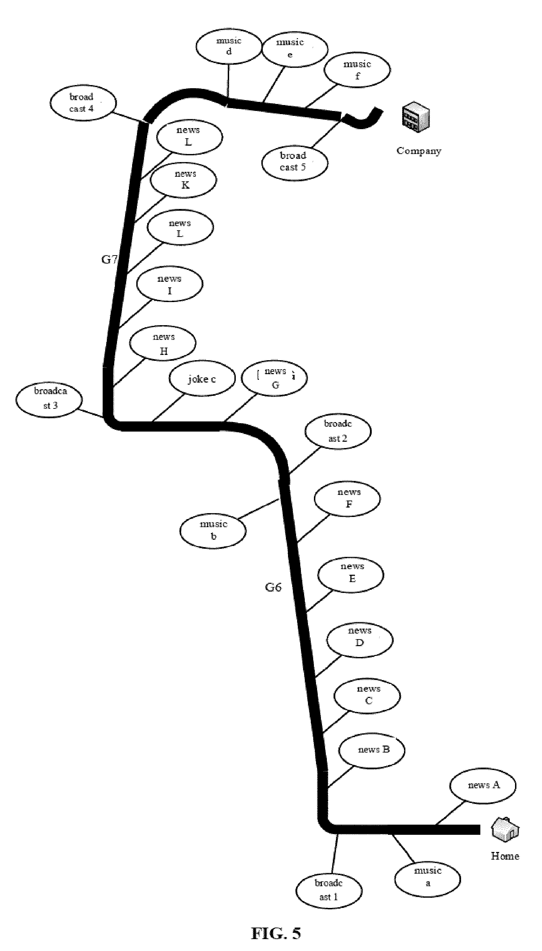

FIG. 4 is a schematic diagram illustrating an apparatus for playing navigation audios according to an exemplary embodiment. The apparatus may be implemented on the server side, for example, it may be a server-side application or a plug-in or a software development kit (SDK) located in the server-side application and other functional units. Alternatively, when the terminal device has sufficient computing power, the apparatus may also be implemented on the terminal device side. As illustrated in FIG. 4, the apparatus may include: a navigation determining unit 00 and a broadcast processing unit 10, in which the main functions of each component unit are as follows.

The navigation determining unit 00 is configured to determine navigation audios to be broadcast in a navigation route and broadcast locations.

Specifically, the navigation determining unit 00 may select a navigation audio whose importance matches with a user's familiarity with the navigation route as the navigation audio to be broadcast from navigation audios of the navigation route according to the user's familiarity with the navigation route and the importance of the navigation audio.

The user's familiarity with the navigation route may be determined based on the number of times the user has been navigated the route in history. When the number of times the user has been navigated the route in history exceeds the preset number threshold, it may be considered that the user is familiar with the navigation route.

The broadcast processing unit 10 is responsible for broadcasting a corresponding navigation audio at the broadcast location, and selecting non-navigation audios to be played in unoccupied durations between broadcast locations according to unoccupied durations.

The broadcast processing unit 10 may specifically include: a scenario determining subunit 11 and a content recommendation subunit 12.

The scenario determining subunit 11 is responsible for determining a user's location when a current navigation audio or non-navigation audio is over; and determining an estimated duration to reach a broadcast location of a next navigation audio according to the user's location.

Here, the estimated duration to reach the broadcast location of the next navigation audio may be estimated based on the distance, the user's speed, road conditions and the like between the user's location and the broadcast location of the next navigation audio. The scenario determining subunit 11 may provide the user's location and the broadcast location of the next navigation audio to the ETA service by calling the ETA service interface, and the ETA service estimates the estimated duration and returns it to the scenario determining subunit 11.

The content recommendation subunit 12 is responsible for selecting a next non-navigation audio to be played according to the estimated duration.

Specifically, the content recommendation subunit 12 may use but not limited to the following ways to select the next non-navigation audio to be played.

Way 1: When the estimated duration is greater than the preset first duration threshold, it is considered that the next navigation audio is far away, and the selection method setting the user's demand a priority is used. That is, a non-navigation audio needed by the user is selected from the non-navigation audios whose audio duration or core content play duration is less than the estimated duration.

When the estimated duration is greater than or equal to the preset second duration threshold, and is less than or equal to the first duration threshold, it is considered that the next navigation audio is near, and the selection method setting the duration a priority is used. That is, a non-navigation audio needed by the user is selected from non-navigation audios whose audio duration or core content play duration is less than and close to the estimated duration, in which when a difference between the estimated duration and the audio duration or the core content play duration is less than the second duration threshold, the audio duration or the core content play duration is close to the estimated duration.

When the estimated duration is less than the second duration threshold, it is considered that the next navigation audio is about to be played, and no non-navigation audio is selected. The above first duration threshold is greater than the second duration threshold.

Way 2: A non-navigation audio whose audio duration or core content play duration is less than and closest to the estimated duration is selected from non-navigation audios needed by the user, when the estimated duration is greater than the preset second duration threshold.

No non-navigation audio is selected when the estimated duration is less than the second duration threshold.

The content recommendation subunit 12 may obtain non-navigation audios from an audio pool for selection, in which the audio pool may be an audio pool maintained by a service provider of a map application, or an audio pool provided by a service provider of a third-party application having a cooperative relation.

The audio pool contains various types of non-navigation audios, including but not limited to news, novels, music, songs, jokes, and the like. In addition to non-navigation audios, the audio pool also maintains the audio durations and core content identifications of respective non-navigation audios. The core content identifications refer to the identifications of the start time and the end time of the core content of the non-navigation audio. The core content play duration may be determined by the identifications.

The content recommendation subunit 12, when determining the non-navigation audios needed by the user, may determine the non-navigation audios needed by the user according to at least one of destination, environmental condition, route condition, user driving condition, and user preference information.

Furthermore, the above broadcast processing unit 10 may further play a switching prompt tone between a non-navigation audio and a navigation audio to alert the user, thereby reminding the user to listen to the navigation audio to be played after, so as to prevent the user from the occurrence of the situations of missing intersections, violations, and the like.

A specific example is given below.

As illustrated in FIG. 5, user A is driving on navigation route 1, which is the work route of user A from home to company. Since user A is a familiar with the route, the navigation broadcast content mainly focuses on turning points. For each intersection, user A is only reminded once, and the electronic eye information is not prompted. The audio types that users prefer are mainly news, music, and jokes.

When the user departs and drives on a long straight section, news A is recommended first, and the play duration of news A is less than the estimated duration for the user to reach the broadcast location 1.

After news A is over, and the estimated duration of the user to reach the broadcast location 1 is less than 4 minutes, the music a that the user is interested in will be played to fill in the duration.

After the music a is over, since the user is quite close to the broadcast location 1, and the estimated duration is less than 10 seconds, no other non-navigation audio will be cut in, the switching prompt tone for the user is played, and the navigation audio of the broadcast location 1 "Keep right uphill, enter the highway, and go to the G6 direction" is broadcast.

After the user turns to G6, the user begins to enter a large section of straight route. At this duration, the news B/C/D/E/F are recommended to the user in order.

When the news F is over, and the estimated duration for the user to reach the broadcast location 2 is less than 4 minutes, the music b that the user is interested in will be played to fill in the duration.

After the music b is over, and the estimated duration to reach the broadcast location 2 is less than 10 seconds, no other non-navigation audio is cut in. After the switching prompt tone is over, the navigation audio "Keep left and enter the North Fifth Ring Road" at the broadcast location 2 is played.

After the user turned to the bridge of the Fifth Ring, the news G began to be played. When the news G is over, the estimated duration for the user to reach the broadcast location 3 is less than 4 minutes. Since the user has been driving for a long time and is exhausted, joke c that fits the scene at that time may be played to refresh the user.

After playing the switching prompt tone, the navigation audio "Keep right, enter the highway, and go to the G6 direction" at the broadcast location 3 is played.

After the user turns to G7, the news H/I/J/K/L continue to be played. After the news L is over, and the broadcast location 4 is very close, the navigation audio "Keep right, exit the highway, and head towards the exit of Shangdi West Road" of the broadcast location 4 is directly played.

After the user gets off the highway, and it is about to enter the extremely slow section, in order to avoid the user's distraction that may cause a car accident, music d/e/f are played to calm the user down. Then, after the switching prompt tone is played, "Turning left" is played at the broadcast location 5 until the user arrives the destination.

According to embodiments of the present disclosure, the present disclosure also provides an electronic device and a readable storage medium.

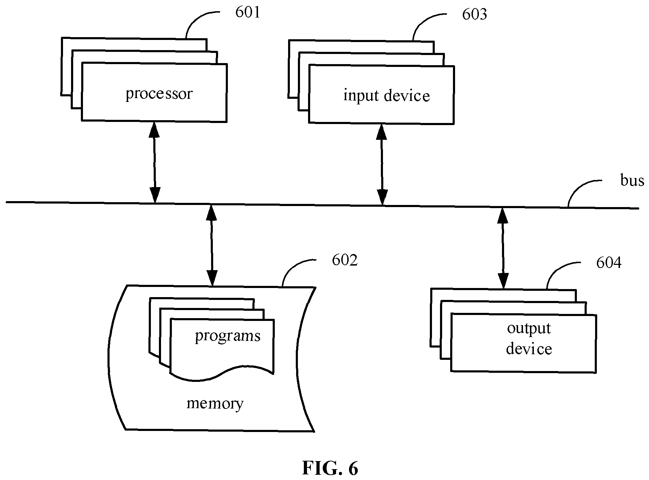

FIG. 6 is a block diagram illustrating an electronic device of a method for playing navigation audios according to an exemplary embodiment. The Electronic device is intended to represent various forms of digital computers, such as laptop computer, desktop computer, work table, personal digital assistant, server, blade server, mainframe computer, and other suitable computer. The Electronic device may also represent various forms of mobile apparatus, such as personal digital processor, cellular phone, smart phone, wearable device, and other similar computing apparatus. The components illustrated herein, their connections and relationships, and their functions are merely illustrative, and are not intended to limit the implementation of the disclosure described and/or required herein.

As illustrated in FIG. 6, the electronic device includes one or more processors 601, a memory 602, and interfaces for connecting various components, including high-speed interfaces and low-speed interfaces. The various components are connected to each other via different buses, and may be installed on a common motherboard or installed in other ways as needed. The processor may process instructions executed in the electronic device, including instructions stored in or on the memory to display graphical information of the GUI on an external input/output apparatus (such as a display device coupled to an interface). In other embodiments, when necessary, a plurality of processors and/or a plurality of buses and a plurality of memories may be used together. Similarly, a plurality of electronic devices may be connected, and each device provides some necessary operations (for example, as a server array, a group of blade servers, or a multi-processor system). In FIG. 6, one processor 601 is taken as an example.

The memory 602 is a non-transitory computer-readable storage medium provided by the disclosure. The memory stores instructions that can be implemented by at least one processor, so that at least one processor implements the method for playing navigation audios provided by the present disclosure. The non-transitory computer-readable storage medium of the present disclosure has computer instructions stored thereon, in which the computer instructions are configured to enable a computer to execute the method for playing navigation audios provided by the present disclosure.

As a non-transitory computer-readable storage medium, the memory 602 may be used to store non-transitory software programs, non-transitory computer-executable programs and modules, such as program instructions/modules corresponding to the method for playing navigation audios in the embodiments of the present disclosure. The processor 601 implements various functional applications and data processing methods of the server, that is, implements the method for playing navigation audios in the above method embodiments, by running non-transitory software programs, instructions, and modules stored in the memory 602.

The memory 602 may include a program memory area and a data memory area, in which the program memory area may store an operating system and at least one application program needed by one function; the data memory area may store data created by the use of the electronic device. In addition, the memory 602 may include a high-speed random access memory, and may also include a non-transitory memory, such as at least one magnetic disk storage device, a flash memory device, or other non-transitory solid-state storage devices. In some embodiments, the memory 602 may optionally include memories remotely provided compared with the processor 601, and these remote memories may be connected to the electronic device through networks. Examples of the above networks include, but are not limited to, Internet, corporate Intranet, local area network, mobile communication network, and combinations thereof.

The electronic device may further include an input device 603 and an output device 604. The processor 601, the memory 602, the input device 603, and the output device 604 may be connected via a bus or other connections. In FIG. 6, the connection via a bus is taken as an example.

The input device 603 may receive input digital or character information, and generate key signal input related to the user settings and function control of the electronic device. The input device may include for example, touch screen, keypad, mouse, trackpad, touchpad, instructing arm, one or more mouse buttons, trackball, joystick and other input apparatus. The output device 604 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various implementations of the systems and technologies described herein may be implemented in digital electronic circuit systems, integrated circuit systems, specific application-specific integrated circuit (ASIC), computer hardware, firmware, software, and/or combinations thereof. These various embodiments may be implemented in one or more computer programs, in which the one or more computer programs may be executed and/or interpreted on a programmable system including at least one programmable processor. The programmable processor may be a dedicated or general programmable processor that can receive data and instructions from the storage system, at least one input device, and at least one output device, and transmit the data and instructions to the storage system, the at least one input device, and the at least one output device.

These computational procedures (also called programs, software, software applications, or codes) include machine instructions of a programmable processor, and may be implemented using high-level process and/or object-oriented programming languages, and/or assembly/machine language. As used herein, the terms "machine-readable medium" and "computer-readable medium" refer to any computer program product, device, and/or apparatus (for example, magnetic disks, optical disks, memories, programmable logic devices (PLD)) used to provide machine instructions and/or data to a programmable processor, including machine-readable media that receive machine instructions as machine-readable signals. The term "machine-readable signal" refers to any signal used to provide machine instructions and/or data to a programmable processor.

In order to provide interaction with the user, the systems and technologies described herein can be implemented on a computer and the computer includes a display device for displaying information to the user (for example, a CRT (cathode ray tube) or an LCD (liquid crystal display) monitor)); and a keyboard and a pointing apparatus (for example, a mouse or a trackball) through which the user can provide input to the computer. Other types of devices may also be used to provide interaction with the user. For example, the feedback provided to the user may be any form of sensory feedback (for example, visual feedback, auditory feedback, or tactile feedback); and input from the user may be received in any form (including acoustic input, voice input, or tactile input).

The systems and technologies described herein can be implemented in a computing system that includes back-end components (for example, as a data server), or a computing system that includes middleware components (for example, an application server), or a computing system that includes front-end components (for example, a user computer with a graphical user interface or web browser through which the user can interact with the implementation of the systems and technologies described herein), or a computing system that includes any combination of the back-end components, middleware components, or front-end components. The components of the system can be connected to each other through any form or medium of digital data communication (for example, a communication network). Examples of communication networks include: local area networks (LAN), wide area networks (WAN), and the Internet.

The computer system may include a client and a server. The client and server are generally far away from each other and usually interact through a communication network. The relationship between the client and the server is generated by computer programs that run on the corresponding computer and have a client-server relationship with each other.

It is to be understood that various forms of processes illustrated above can be used to reorder, add or delete blocks. For example, the blocks described in the present disclosure can be executed in parallel, sequentially, or in a different order, as long as the desired result of the technical solution disclosed in the present disclosure can be achieved, this is not limited herein.

The above specific implementations do not constitute a limitation on the protection scope of the present disclosure. Those skilled in the art should understand that various modifications, combinations, sub-combinations and substitutions can be made according to design requirements and other factors. Any modification, equivalent replacement and improvement made within the spirit and principle of the disclosure shall be included in the protection scope of this disclosure.

## Claims

1. A method for playing navigation audios, comprising:
determining navigation audios to be broadcast in a navigation route and broadcast locations; and
broadcasting a corresponding navigation audio at the broadcast location, and selecting non-navigation audios to be played in unoccupied durations between broadcast locations according to unoccupied durations.

2. The method of claim 1, wherein determining navigation audios to be broadcast in a navigation route comprises:
selecting a navigation audio whose importance matches with a user's familiarity with the navigation route as the navigation audio to be broadcast from navigation audios of the navigation route according to the user's familiarity with the navigation route and the importance of the navigation audio.

3. The method of claim 1, wherein selecting non-navigation audios to be played in unoccupied durations between broadcast locations according to unoccupied durations comprises:
determining a user's location when a current navigation audio or non-navigation audio is over;
determining an estimated duration to reach a broadcast location of a next navigation audio according to the user's location; and
selecting a next non-navigation audio to be played according to the estimated duration.

4. The method of claim 3, wherein selecting the next non-navigation audio to be played according to the estimated duration comprises:
when the estimated duration is greater than a preset first duration threshold, selecting a non-navigation audio required by the user from non-navigation audios whose audio duration or core content play duration is less than the estimated duration; and
when the estimated duration is greater than or equal to a preset second duration threshold and is less than or equal to the preset first duration threshold, selecting a non-navigation audio required by the user from non-navigation audios whose audio duration or core content play duration is less than and close to the estimated duration, wherein when a difference between the estimated duration and the audio duration or the core content play duration is less than the second duration threshold, the audio duration or the core content play duration is close to the estimated duration;
wherein the first duration threshold is greater than the second duration threshold.

5. The method of claim 3, wherein selecting the next non-navigation audio to be played according to the estimated duration comprises:
when the estimated duration is greater than a preset second duration threshold, selecting a non-navigation audio whose audio duration or core content play duration is less than and closest to the estimated duration from non-navigation audios required by the user.

6. The method of claim 4 or 5, wherein selecting the next non-navigation audio to be played according to the estimated duration further comprises:
selecting no non-navigation audio when the estimated duration is less than the second duration threshold.

7. The method of claim 4 or 5, wherein the non-navigation audios required by the user are determined according to at least one of destination, environmental condition, route condition, user driving condition, and user preference information.

8. The method of claim 1, further comprising:
playing a switching prompt tone between the non-navigation audio and the navigation audio.

9. An apparatus for playing navigation audios, comprising:
a navigation determining unit, configured to determine navigation audios to be broadcast in a navigation route and broadcast locations; and
a broadcast processing unit, configured to broadcast a corresponding navigation audio at the broadcast location, and select non-navigation audios to be played in unoccupied durations between broadcast locations according to unoccupied durations.

10. The apparatus of claim 9, wherein the navigation determining unit is specifically configured to select a navigation audio whose importance matches with a user's familiarity with the navigation route as the navigation audio to be broadcast from navigation audios of the navigation route according to the user's familiarity with the navigation route and the importance of the navigation audio.

11. The apparatus of claim 9, wherein the broadcast processing unit specifically comprises:
a scenario determining subunit, configured to determine a user's location when a current navigation audio or non-navigation audio is over; and determine an estimated duration to reach a broadcast location of a next navigation audio according to the user's location; and
a content recommendation subunit, configured to select a next non-navigation audio to be played according to the estimated duration.

12. The apparatus of claim 11, wherein the content recommendation subunit is specifically configured to:
when the estimated duration is greater than a preset first duration threshold, select a non-navigation audio required by the user from non-navigation audios whose audio duration or core content play duration is less than the estimated duration; and
when the estimated duration is greater than or equal to a preset second duration threshold and is less than or equal to the preset first duration threshold, select a non-navigation audio required by the user from non-navigation audios whose audio duration or core content play duration is less than and close to the estimated duration, wherein when a difference between the estimated duration and the audio duration or the core content play duration is less than the second duration threshold, the audio duration or the core content play duration is close to the estimated duration;
wherein the first duration threshold is greater than the second duration threshold.

13. The apparatus of claim 11, wherein the content recommendation subunit is specifically configured to:
when the estimated duration is greater than the preset second duration threshold, select a non-navigation audio whose audio duration or core content play duration is less than and closest to the estimated duration from non-navigation audios required by the user.

14. The apparatus of claim 12 or 13, wherein the content recommendation subunit is further configured to:
select no non-navigation audio when the estimated duration is less than the second duration threshold.

15. The apparatus of claim 12 or 13, wherein the content recommendation subunit is further configured to determine the non-navigation audios required by the user according to at least one of destination, environmental condition, route condition, user driving condition, and user preference information.

16. The apparatus of claim 9, wherein the broadcast processing unit is further configured to play a switching prompt tone between the non-navigation audio and the navigation audio.

17. An electrical device, comprising:
at least one processor, and
a memory communicatively coupled to at least one processor; wherein,
the memory is configured to store instructions executable by the at least one processor, when the instructions are executed by the at least one processor, the at least one processor is enabled to execute the method of any one of claims 1-8.

18. A non-transitory computer-readable storage medium having computer instructions stored thereon, wherein the computer instructions are configured to enable a computer to execute the method of any one of claims 1-8.
